# EUROPÄISCHE PATENTSCHRIFT

(11) **EP 3 030 439 B1**
(45) Veröffentlichungstag und Bekanntmachung des Hinweises auf die Patenterteilung: **04.04.2018**
(21) Anmeldenummer: 14744314.7
(22) Anmeldetag: 25.07.2014
(51) Int. Cl.: B60K 1/04, B60K 13/04, H01M 2/10

(54) **FAHRZEUG MIT EINEM HYBRIDANTRIEB**
VEHICLE HAVING HYBRID DRIVE SYSTEM
VÉHICULE AUTOMOBILE À PROPULSION HYBRIDE

(30) Priorität: 07.08.2013 DE 102013215507
(43) Veröffentlichungstag der Anmeldung: 15.06.2016
(73) Patentinhaber: Volkswagen Aktiengesellschaft, 38440 Wolfsburg (DE)
(72) Erfinder: GILDEMANN, Dirk, 38446 Wolfsburg (DE); HERRERA, Luis, 30161 Hannover (DE); MEINDERMANN, Bernd, 38106 Braunschweig (DE); YURTSEVEN, Mesut, 38226 Salzgitter (DE)
(86) Internationale Anmeldenummer: PCT/EP2014/065998
(87) Internationale Veröffentlichungsnummer: WO 2015/018658

(56) Entgegenhaltungen:
- WO-A1-2011/135270
- WO-A1-2012/066247
- DE-A1-102009 037 012
- DE-A1-102012 000 622
- FR-A1- 2 993 046

## Beschreibung

Die Erfindung betrifft ein Fahrzeug mit einem Hybridantrieb nach dem Oberbegriff des Patentanspruches 1.

Bei einem solchen Fahrzeug kann die Traktionsbatterie am Unterboden im Fondbereich (das heißt hinter den Vordersitzen) des Fahrzeuges angeordnet sein, wie es aus der EP 1 479 567 A1 bekannt ist, bei der seitlich neben dem nach außen thermisch isolierten Batteriegehäuse der Schalldämpfer einer längsgeführten Abgasanlage positioniert ist. Bei einer solchen Anordnung ist die Größe und Kapazität der Traktionsbatterie insofern beeinträchtigt, als der Wärmetransport im Unterboden, insbesondere die Wärmestrahlung der Abgasanlage und der konvektive Wärmeübergang zwischen der Luft und der Traktionsbatterie, bei der Fahrzeugauslegung entsprechend zu berücksichtigen ist. Die Abgasanlage einer Brennkraftmaschine ist hier in einem nach unten offenen, sich in Fahrzeuglängsrichtung erstreckenden Mitteltunnel geführt. Aus der WO 2012/066247 A1, DE 10 2012 000 622 A1, DE 10 2009 037 012 A1 und FR 2 993 046 A1 ist eine Traktionsbatterie zur Bereitstellung von Energie für den Antrieb eines Fahrzeuges mit einer an der Unterseite der Traktionsbatterie nach innen gerichteten Ausnehmung bekannt. Die Ausnehmung ist dazu ausgelegt, ein Abgasrohr aufzunehmen. Die FR 2 993 046 A1 zeigt ergänzend noch ein Blech als Unterfahrschutz, das zwischen Traktionsbatterie und Abgasrohr angeordnet ist. Aus der gattungsbildenden WO 2011/135270 A1 ist ein Hybrid-Fahrzeug bekannt, in der die Traktionsbatterie eine Ausnehmung zur Aufnahme eines Abgasrohres zeigt. Das Abgasrohr ist über ein Isolierelement zur Traktionsbatterie abgeschirmt. Die Aufgabe der Erfindung besteht darin, ein Fahrzeug mit einem Hybridantrieb bereitzustellen, bei dem die Traktionsbatterie in kompakter Anordnung bauraumsparend sowie ohne größere Beeinträchtigung ihrer Kapazität im Fahrzeug angeordnet werden kann.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass aufgrund der starken betriebsbedingten Erwärmung der Abgasanlage sowie der Brennkraftmaschine eine thermisch günstige Positionierung der Traktionsbatterie unter größtmöglicher Ausnutzung der realisierbaren Batteriekapazität problematisch ist. Vor diesem Hintergrund ist gemäß dem kennzeichnenden Teil des Patentanspruches 1 im Batteriegehäuse der Traktionsbatterie eine nach unten offene Längsgasse ausgebildet. Die Längsgasse in dem Batteriegehäuse verlängert den Mitteltunnel zur Fahrzeugheckseite. Die Abgasanlage kann sich daher im weiteren Verlauf nach hinten bauraumgünstig durch die Längsgasse hindurch erstrecken. Auf diese Weise ergibt sich eine kompakte Anordnung, bei der Batteriegehäuse konturangepasst um eine Abgasleitung der Abgasanlage geformt ist.
Bei einem Hybridantrieb mit einer Brennkraftmaschine besteht die Problematik insbesondere darin, dass sowohl im Motorraum als auch im Mitteltunnel besonders heiße Betriebstemperaturen aufgrund von Wärmestrahlung sowie Wärmekonvektion vorliegen, bei der die angrenzende Luft stark erhitzt wird und in direktem thermischen Kontakt mit der Traktionsbatterie treten kann. Durch die erfindungsgemäße kompakte Anordnung der Abgasanlage an der Traktionsbatterie kann es daher in Extremfällen (zum Beispiel bei Bergfahrt mit Anhängebetrieb, Volllastbetrieb, oder in Heißländern) zu hohen Temperaturen innerhalb des Batteriegehäuses kommen. Diese hohen Betriebstemperaturen führen wiederum zu einer schnellen Alterung der Batterie und im Extremfall zu Sicherheitsrisiken.

Vor diesem Hintergrund ist es bevorzugt, wenn in der Längsgasse des Batteriegehäuses zusätzlich ein Isolierelement zur Wärmeisolierung gegenüber der Abgasanlage angeordnet ist. Das Isolierelement kann bevorzugt außenseitig am Batteriegehäuse angeordnet sein und das batterieinterne Kühlsystem unterstützen. Bevorzugt kann das Isolierelement im Profil wannenförmig sowie konturangepasst in der Längsgasse vorgesehen sein und sich durchgängig durch die gesamte Längsgasse erstrecken.

In einer bevorzugten Ausführungsform kann das Isolierelement zweiteilig mit einem, der Abgasanlage zugewandten Wärmeabschirmblechteil und einem Isolierteil, etwa aus einem Schaummaterial, ausgebildet sein.

In einer besonderen Ausführung ist im Mitteltunnel ein Schalldämpfer der Abgasanlage mit entsprechend großem Querschnitt angeordnet, während sich durch die nach hinten anschließende Längsgasse der Traktionsbatterie eine Abgasleitung mit reduziertem Querschnitt erstreckt. Entsprechend kann der querschnittsgroße Mitteltunnel unter Bildung eines stufenartigen Übergangs an einer vorderen Batteriegehäuse-Stirnwand in die querschnittsreduzierte Längsgasse der Traktionsbatterie übergehen. Für eine wirkungsvolle Wärmeisolierung kann das Isolierelement einen vorderen Randbereich aufweisen, der sich über die Längsgasse nach vorne hinaus verlängert und zugleich auch die vordere Batteriegehäuse-Stirnwand überdeckt.

Zudem kann der vordere Randbereich des Isolierelementes mit einem vorgegebenen Überstand in den Mitteltunnel einragen und in Anlage mit der Innenseite des Mitteltunnels sein.

Die Abgasleitung der Abgasanlage erstreckt sich bevorzugt berührungsfrei unter Bildung eines ersten Luftströmungsspaltes durch die Längsgasse der Traktionsbatterie. Zudem kann zwischen der Abgasanlage (das heißt dem Schalldämpfer) und dem Mitteltunnel ein zweiter Luftströmungsspalt vorgesehen sein, um eine Wärmeabfuhr aus dem Schalldämpfer über Luftkonvektion zu ermöglichen.

Der oben erwähnte vordere Randbereich des Isolierelementes kann einen querschnittserweiterten Strömungsraum begrenzen, der den ersten Luftströmungsspalt mit dem zweiten Luftströmungsspalt strömungstechnisch verbindet. Auf diese Weise wird die im Mitteltunnel durch den zweiten Luftströmungsspalt nach hinten geführte Luftströmung vorbei an der Batteriegehäuse-Stirnwand in den ersten Luftströmungsspalt geleitet und trifft die Luftströmung nicht direkt auf die Batteriegehäuse-Stirnwand.

Zur besseren Wärmeisolierung kann in dem zweiten Luftströmungsspalt zwischen dem Mitteltunnel und der Abgasanlage ein weiteres Wärmeabschirmelement angeordnet sein, das sich längs des Mitteltunnel konturangepasst erstreckt und den zweiten Luftströmungsspalt in zwei Teilspalte aufteilt. Das Wärmeabschirmelement kann mit seinem hinteren Rand in den oben erwähnten, vom vorderen Randbereich des Isolierelementes begrenzten Strömungsraum einragen.

Zur Verbesserung der Aerodynamik des Fahrzeuges kann eine Bodenverkleidung vorgesehen sein, die unter Freilassung des Mitteltunnels und der Längsgasse die Unterseite des Fahrzeugbodens überdeckt. Untersuchungen haben gezeigt, dass es im Zwischenraum zwischen der Bodenverkleidung und dem Fahrzeugboden zu einer Luftkonvektion kommt, wodurch die von der Abgasanlage beziehungsweise von der Brennkraftmaschine generierte Wärme über Luftströmungen bis zur Traktionsbatterie übertragen wird. Um einen solchen Wärmetransport zur Traktionsbatterie zu vermeiden, ist es von Vorteil, wenn in dem Zwischenraum zwischen der Bodenverkleidung und dem Fahrzeugboden ein, in der Fahrzeugquerrichtung verlaufendes Abdichtelement, etwa eine Dichtlippe, angeordnet ist, die eine Wärmeübertragung durch Luftkonvektion auf die Traktionsbatterie unterbindet.

Zur Wärmeisolierung des Batteriegehäuses gegenüber der Abgasleitung ist somit ein schalenförmiges Abschirmblechteilteil und ein ebenfalls schalenförmiges, über dem Abschirmblechteilteil befindliches Isolierteil vorgesehen. Das Abschirmblechteil und das Isolierteil sind einfach vorzufertigen und am Unterboden zu montieren und bilden eine wirksame Wärmedämmung in einer kompakten, geringen Einbauraum beanspruchenden Konstruktion mit innerhalb des fortgeführten Mitteltunnels angeordneter Abgasleitung der Abgasanlage.

Dabei können besonders bevorzugt das Abschirmblechteil und das Isolierteil wannenförmig ausgebildet und mit überlappenden, vorderen und hinteren Randbereichen auf den Mitteltunnel und einen ungefähr vertikalen Wandabschnitt einer Bodenverkleidung aufgesetzt und mit seitlichen Randflanschen an der Bodenverkleidung abgestützt sein.

Das Isolierteil kann fertigungstechnisch einfach und kostengünstig aus einer Kunststoffschale und einer darauf aufgebrachten Isolierschicht gebildet sein, wobei gegebenenfalls die Isolierschicht zusätzlich mit einer Al-Beschichtung oder Al-Folie zum Batteriegehäuse hin abgedeckt sein kann.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in raumbildlicher Darstellung eine Unteransicht auf einen hybridbetriebenes Fahrzeug in einem Rohbauzustand der Karosserie mit am Unterboden angeordneter Abgasanlage und einer Traktionsbatterie;
- Fig. 2: die Anordnung der Traktionsbatterie am Unterboden des Fahrzeugs in Explosionsdarstellung der Bauteile;
- Fig. 3: einen Längsschnitt gemäß Linie III - III der Fig. 4 durch den Mitteltunnel des Unterbodens mit Batteriegehäuse und montiertem Isolierteil und Wärmeabschirmblechteil zur Abgasleitung der Abgasanlage; und
- Fig. 4: einen teilweisen Querschnitt durch den Batteriegehäuse mit Isolierteil, Wärmeabschirmblechteil und der Abgasleitung entlang der Linie IV - IV der Fig. 3.

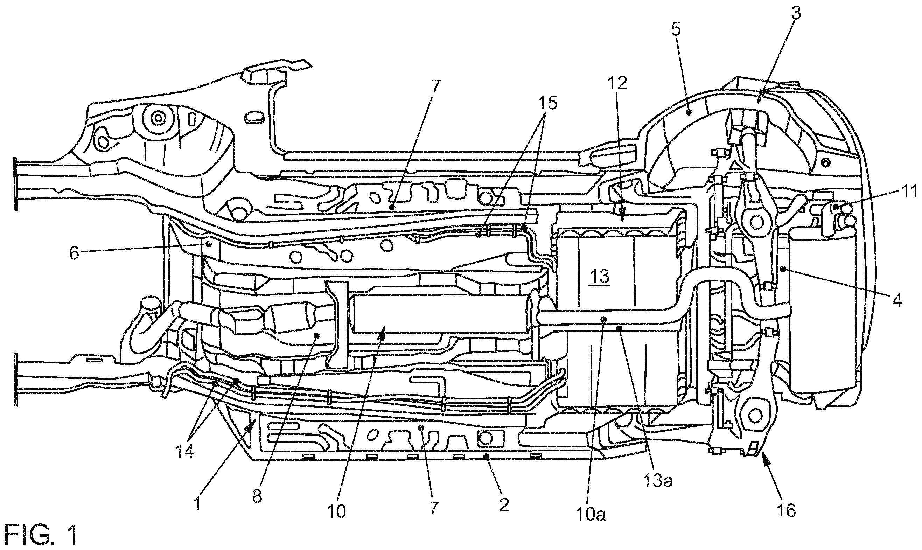

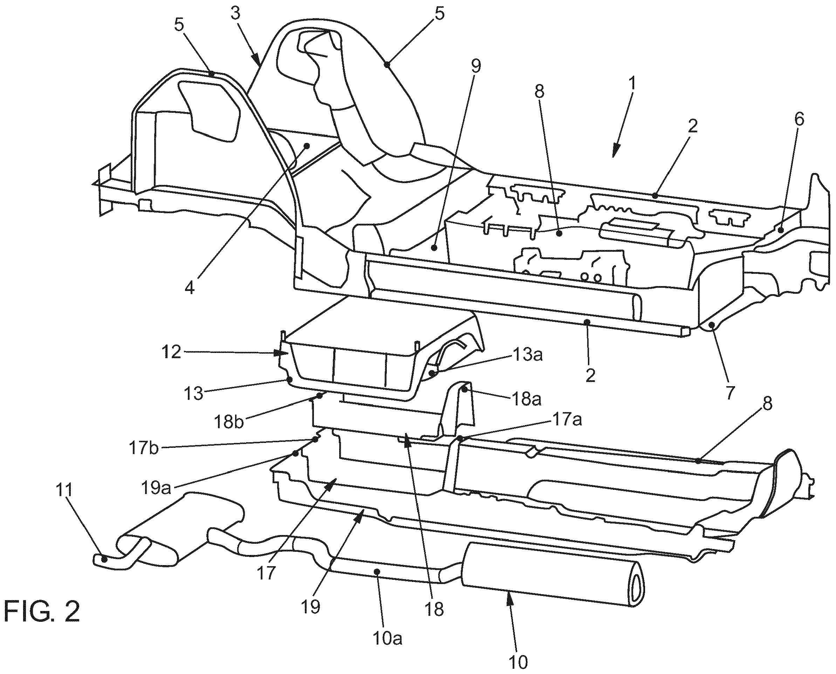

Die Fig. 1 und 2 zeigen grob schematisch ein Rohbauteil 1 einer Karosserie für ein hybridbetriebenes Personenkraftfahrzeug, das nur soweit für das Verständnis der vorliegenden Erfindung erforderlich beschrieben ist und im Übrigen wie bekannt ausgeführt sein kann.

Das Rohbauteil 1 weist einen an seitliche Schweller 2, an eine hintere Schweißgruppe 3 mit Kofferraumboden 4 und Radhausschalen 5 und an eine vordere Stirnwand 6 angebundenen Unterboden 7 mit einem Mitteltunnel 8 auf, wobei der nach unten offene Mitteltunnel 8 an einem Fondblech 9 endet, das später die Fondsitze des Fahrzeugs trägt.

In der Unteransicht der Fig. 1 ist ersichtlich, dass in dem Mitteltunnel 8 die Abgasanlage 10 des Fahrzeugs verlegt ist, die in an sich bekannter Weise mit Abgasreinigungseinrichtungen, Schalldämpfern und verbindenden Abgasleitungen ausgeführt sein kann. Die Abgasanlage 10 ist vorne im Motorraum an eine Brennkraftmaschine angeschlossen und endet in einem hinteren Endrohr 11.

An den Mitteltunnel 8 anschließend ist im Bereich des Fondblechteils 9 (Fig. 2) von unten eine Traktionsbatterie 12 (zum Beispiel eine Lithium-Ionen-Hochvoltbatterie) angebaut, die nach dem Stand der Technik aufgebaut sein kann. Die entsprechenden Batteriezellen sind in einem Batteriegehäuse 13 nach außen isoliert angeordnet, mit einer Kühlung und einer Beheizung versehen und an entsprechende, nach vorne zur Brennkraftmaschine und zur Elektromaschine geführte Kühlleitungen 14 (Fig. 1) und elektrische Versorgungsleitungen 15 angeschlossen.

Die an dem Fondblech 9 und/oder an den seitlichen Schwellern 2 des Rohbauteils 1 befestigte und sich bis zu den Schwellern 2 quer erstreckende Traktionsbatterie 12 ist vor einer nicht weiter beschriebenen, hinteren Radaufhängung 16 mit einem tragenden Hilfsrahmen (Fig. 1) des Fahrzeugs positioniert.

In dem Batteriegehäuse 13 (vgl. Fig. 2) ist eine nach unten offene, den Mitteltunnel fortsetzende Längsgasse 13a vorgesehen, innerhalb der ein geradliniger Abschnitt einer Abgasleitung 10a der Abgasanlage 10 verläuft.

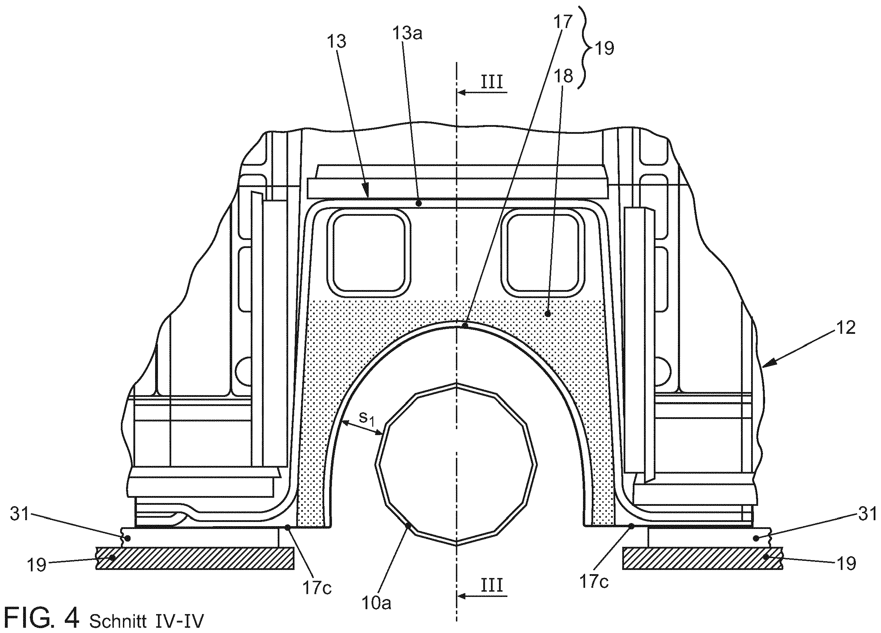

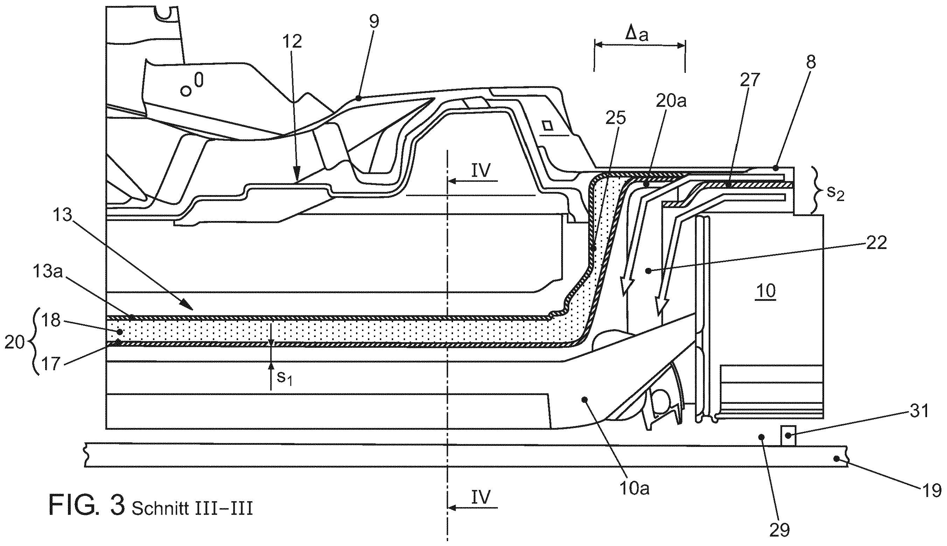

Zur Abschirmung des Batteriegehäuses 13 gegen von der Abgasleitung 10a bei Brennkraftmaschinenbetrieb des Kraftfahrzeugs abstrahlende Wärmeenergie bzw. Hitze ist ein Isolierelement 20 vorgesehen, das ein Wärmeabschirmblechteil 17 und ein Isolierteil 18 aufweist. Diese sind, wie die Fig. 4 zeigt, im Querschnittsprofil wannenförmig bzw. schalenförmig geformt.

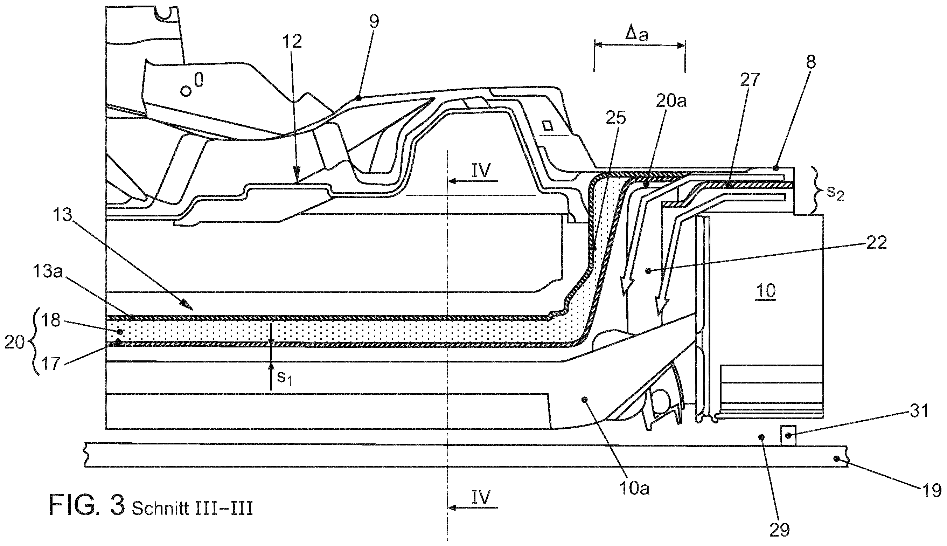

In der Fig. 3 geht der Mitteltunnel 8 unter Bildung eines stufenartigen Übergangs an einer vorderen Batteriegehäuse-Stirnwand 25 in die querschnittsreduzierte Längsgasse 13a der Traktionsbatterie 12 über. Das oben erwähnte Isolierelement 20 weist einen vorderen Randbereich 20a auf, der über die Längsgasse 13a hinaus nach vorne verlängert ist und die vordere Batteriegehäuse-Stirnwand 25 überdeckt. Der vordere Randbereich 20a ragt mit einem Überstand Δa in den Mitteltunnel 8 hinein und ist mit dessen Innenseite in Anlage. Der jeweils hintere Randbereich 17b, 18b (Fig. 2) übergreift einen vertikalen Wandabschnitt 19a einer den Unterboden 7 und das Fondblech 9 nach unten abdeckenden Bodenverkleidung 19.

Die Fig. 4 zeigt einen Querschnitt durch die Anordnung und Auslegung des Wärmeabschirmblechteils 17 und des Isolierteils 18 innerhalb der Längsgasse 13a des Batteriegehäuses 13.

Dabei ist das der Abgasleitung 10a zugewandte Wärmeabschirmblechteil 17 zum Beispiel aus Stahl oder Aluminium und in einer Wandstärke von zum Beispiel 2,5mm halbkreisförmig geformt und weist seitlich anschließende Randbereiche 17c auf, die an seitlichen Randbereichen 18c des Isolierteils 18 anliegen. Der zwischen der Abgasleitung 10a und dem Wärmeabschirmblechteil 17 gebildete Luftströmungsspalt s1 beträgt vorzugsweise ca. 15mm.

In der Fig. 3 ist zwischen der Abgasanlage 10 und dem Mitteltunnel 8 ein zweiter Luftspalt s₂ vorgesehen. Der zweite Luftspalt s₂ geht in einen Strömungsraum 22 über, der vom vorderen Randbereich 20a des Isolierelements 20 begrenzt ist. Der Strömungsraum 22 verbindet den ersten Luftspalt s₁ mit dem zweiten Luftspalt s₂ strömungstechnisch. In dem zweiten Luftspalt s₂ zwischen dem Mitteltunnel 8 und der Abgasanlage 10 ist ein Wärmeabschirmelement 27 angeordnet, das den zweiten Luftspalt s₂ in zwei Teilspalte aufteilt, durch die sich die mit Pfeilen angedeuteten Luftströmungen erstrecken.

Die Fig. 3 zeigt ferner in einem Längsschnitt den Verlauf des Luftströmungsspaltes s1 entlang der Längsgasse 13a des Batteriegehäuses 13, wobei durch die Spalte s1 und s2 eine, Wärmeenergie abführende Luftzirkulation bzw. Luftströmung erzielt werden kann, wie es mit den eingezeichneten Pfeilen angedeutet ist.

Das beschriebene, eigenständige Isolierungskonzept mit dem Wärmeabschirmblechteil 17 und dem Isolierteil 18 ermöglicht es, die Abgasleitung 10a der Abgasanlage 10 enger an die Traktionsbatterie 12 bzw. an die Längsgasse 13a heranzuführen, wodurch die Batteriekapazität durch mehr Einbauraum erhöht werden kann. Durch die thermische Entkopplung des Batteriesystems von der Umgebung wird ferner eine Entlastung der aktiven Batteriekühlung bei hohen Außentemperaturen erreicht bzw. eine zu schnelle Abkühlung bei niedrigen Außentemperaturen vermieden.

Wie aus den Fig. 3 und 4 weiter hervorgeht, ist im Zwischenraum 29 (Fig. 3) zwischen der Bodenverkleidung 19 und dem Fahrzeugboden ein, in der Fahrzeugquerrichtung verlaufendes Abdichtelement 31 vorgesehen ist. Das Abdichtelement 31 kann beispielhaft eine Dichtlippe sein, die eine Wärmeübertragung durch Luftkonvektion im Zwischenraum 29 in Richtung auf die Traktionsbatterie 12 unterbindet.

## Patentansprüche

1. Fahrzeug mit einem Hybridantrieb, dessen Traktionsbatterie (12) fondseitig an der Unterseite eines Fahrzeugbodenblechteils (9) angeordnet ist, das einen nach unten offenen Mitteltunnel (8) für eine Abgasanlage (10) einer Brennkraftmaschine aufweist, wobei im Batteriegehäuse (13) der Traktionsbatterie (12) eine nach unten offene Längsgasse (13a) ausgebildet ist, die den Mitteltunnel (8) zur Fahrzeugheckseite verlängert und durch die sich die Abgasanlage (10) im weiteren Verlauf nach hinten erstreckt, und dass insbesondere in der Längsgasse (13a) des Batteriegehäuses (13) ein Isolierelement (20) zur Wärmeisolierung gegenüber der Abgasanlage (10) angeordnet ist, **dadurch gekennzeichnet, dass** der Mitteltunnel (8) in der Fahrzeuglängsrichtung nach hinten unter Bildung eines stufenartigen Übergangs an einer vorderen Batteriegehäuse-Stirnwand (25) in die querschnittsreduzierte Längsgasse (13a) der Traktionsbatterie (12) übergeht und dass das Isolierelement (20) einen vorderen Randbereich (20a) aufweist, der über die Längsgasse (13a) hinaus verlängert ist und die vordere Batteriegehäuse-Stirnwand (25) überdeckt.

2. Fahrzeug nach Anspruch 1, **dadurch gekennzeichnet, dass** die Wandung der Längsgasse (13a) an ihrer der Abgasanlage (10) zugewandten Seite mit dem Isolierelement (20) ausgebildet ist, und/oder dass das Isolierelement (20) im Profil wannenförmig ist und sich durchgängig durch die Längsgasse (13a) erstreckt.

3. Fahrzeug nach Anspruch 1 oder 2, **dadurch gekennzeichnet, dass** das Isolierelement (20) zweiteilig mit einem Wärmeabschirmblechteil (17) und einem Isolierteil (18) ausgebildet ist.

4. Fahrzeug nach einem der vorhergehenden Ansprüche, **dadurch gekennzeichnet, dass** sich die Abgasanlage (10) mit einer Abgasleitung (10a) berührungsfrei unter Bildung eines ersten Luftströmungsspalts (s₁) durch die Längsgasse (13a) der Traktionsbatterie (12) erstreckt.

5. Fahrzeug nach Anspruch 3 oder 4, **dadurch gekennzeichnet, dass** der vordere Randbereich (20a) des Isolierelements (20) mit einem Überstand (Δa) in den Mitteltunnel (8) einragt, insbesondere in Anlage mit der Innenseite des Mitteltunnels (8) ist.

6. Fahrzeug nach einem der vorhergehenden Ansprüche, **dadurch gekennzeichnet, dass** zwischen der Abgasanlage (10) und dem Mitteltunnel (8) ein zweiter Luftspalt (s₂) vorgesehen ist, und dass insbesondere der vordere Randbereich (20a) des Isolierelements (20) einen Strömungsraum (22) begrenzt, der den ersten Luftspalt (s₁) mit dem zweiten Luftspalt (s₂) strömungstechnisch miteinander verbindet.

7. Fahrzeug nach Anspruch 6, **dadurch gekennzeichnet, dass** im zweiten Luftspalt (s₂) zwischen dem Mitteltunnel (8) und der Abgasanlage (10) ein Wärmeabschirmelement (27) angeordnet ist, das den zweiten Luftspalt (s₂) in zwei Teilspalte aufteilt.

8. Fahrzeug nach einem der vorhergehenden Ansprüche, **dadurch gekennzeichnet, dass** zur Verbesserung der Aerodynamik eine Bodenverkleidung (19) vorgesehen ist, die unter Freilassung des Mitteltunnels (8) und der Längsgasse (13a) die Unterseite des Fahrzeugbodens überdeckt.

9. Fahrzeug nach Anspruch 8, **dadurch gekennzeichnet, dass** in dem Zwischenraum (29) zwischen der Bodenverkleidung (19) und dem Fahrzeugboden ein, insbesondere in Fahrzeugquerrichtung (y) verlaufendes Abdichtelement (31) vorgesehen ist, das eine Wärmeübertragung, insbesondere durch Luftkonvektion, im Zwischenraum (29), auf die Traktionsbatterie (12) unterbindet.

## Claims

1. Vehicle having a hybrid drive, the traction battery (12) of which is arranged at the rear end on the underside of a vehicle floor panel part (9) which has a downwardly open central tunnel (8) for an exhaust system (10) of an internal combustion engine, wherein, in the battery housing (13) of the traction battery (12), there is formed a downwardly open longitudinal channel (13a) which forms an elongation of the central tunnel (8) toward the vehicle rear side and through which the exhaust system (10) extends in its further course toward the rear, and in that, in particular, an insulating element (20) for thermal insulation with respect to the exhaust system (10) is arranged in the longitudinal channel (13a) of the battery housing (13), **characterized in that**, in the vehicle longitudinal direction toward the rear, the central tunnel (8) transitions into the longitudinal channel (13a), of reduced cross section, of the traction battery (12) with the formation of a step-like transition at a front battery housing face wall (25), and **in that** the insulating element (20) has a front edge region (20a) which is extended beyond the longitudinal channel (13a) and which covers the front battery housing face wall (25).

2. Vehicle according to Claim 1, **characterized in that** the wall of the longitudinal channel (13a) is formed with the insulating element (20) on that side of said wall which faces toward the exhaust system (10), and/or **in that** the insulating element (20) has a trough-shaped profile and extends in continuous fashion through the longitudinal channel (13a).

3. Vehicle according to Claim 1 or 2, **characterized in that** the insulating element (20) is of two-part form with a heat shield panel part (19) and with an insulating part (18).

4. Vehicle according to one of the preceding claims, **characterized in that** the exhaust system (10) extends with an exhaust line (10a) through the longitudinal channel (13a) of the traction battery (12) in contact-free fashion with the formation of a first air flow gap (s₁).

5. Vehicle according to Claim 3 or 4, **characterized in that** the front edge region (20a) of the insulating element (20) projects with a projecting length (Δa) into the central tunnel (8), in particular is in contact with the inner side of the central tunnel (8).

6. Vehicle according to one of the preceding claims, **characterized in that** a second air gap (s₂) is provided between the exhaust system (10) and the central tunnel (8), and **in that**, in particular, the front edge region (20a) of the insulating element (20) delimits a flow chamber (22) which connects the first air gap (s₁) to the second air gap (s₂) in terms of flow.

7. Vehicle according to Claim 6, **characterized in that**, in the second air gap (s₂) between the central tunnel (8) and the exhaust system (10), there is arranged a heat shield element (27) which divides the second air gap (s₂) into two partial gaps.

8. Vehicle according to one of the preceding claims, **characterized in that**, to improve the aerodynamics, a floor lining (19) is provided which covers the underside of the vehicle floor while exposing the central tunnel (8) and the longitudinal channel (13a).

9. Vehicle according to Claim 8, **characterized in that** a sealing element (31) is provided in the intermediate space (29) between the floor lining (19) and the vehicle floor, which sealing element runs in particular in a vehicle transverse direction (y) and suppresses heat transfer, in particular by air convection, in the intermediate space (29), to the traction battery (12).

## Revendications

1. Véhicule doté d'un entraînement hybride dont la base de la batterie de traction (12) est disposée sur le côté inférieur d'une partie (9) de tôle de plancher du véhicule qui présente un tunnel central (8) ouvert vers le bas pour l'installation (10) de gaz d'échappement d'un moteur à combustion interne,
une voie longitudinale (13a) ouverte vers le bas qui prolonge le tunnel central (8) en direction du côté arrière du véhicule et par laquelle l'installation (10) de gaz d'échappement poursuit son développement vers le bas étant formée dans le boîtier (13) de la batterie de traction (12),
et en ce qu'un élément isolant (20) assurant l'isolation thermique vis-à-vis de l'installation (10) de gaz d'échappement étant disposé en particulier dans la voie longitudinale (13a) du boîtier (13) de la batterie,
**caractérisé en ce que**
le tunnel central (8) se prolonge vers l'arrière dans le sens de la longueur du véhicule en formant une transition en gradins sur une paroi frontale avant (25) du boîtier de batterie jusque dans la voie longitudinale (13a) à section transversale réduite de la batterie de traction (12) et
**en ce que** l'élément isolant (20) présente une bordure avant (20a) qui se prolonge au-delà de la voie longitudinale (13a) et qui recouvre la paroi frontale avant (25) du boîtier de batterie.

2. Procédé selon la revendication 1, **caractérisé en ce que** sur son côté tourné vers l'installation (10) de gaz d'échappement, la paroi de la voie longitudinale (13a) est configurée avec l'élément isolant (20) et/ou **en ce que** l'élément isolant (20) présente en profil la forme d'une cuvette et s'étend complètement dans la voie longitudinale (13a).

3. Véhicule selon les revendications 1 ou 2, **caractérisé en ce que** l'élément isolant (20) est configuré en deux pièces, avec une pièce (17) en tôle de protection contre la chaleur et une partie isolante (18) .

4. Véhicule selon l'une des revendications précédentes, **caractérisé en ce que** l'installation (10) de gaz d'échappement s'étend sans contact par un conduit (10a) de gaz d'échappement dans la voie longitudinale (13a) de la batterie de traction (12) en formant un premier interstice (s₁) d'écoulement d'air.

5. Véhicule selon l'une des revendications 3 ou 4, **caractérisé en ce que** la bordure avant (20a) de l'élément isolant (20) pénètre dans le tunnel central (8) avec un débord (Δa) et en particulier vient se placer contre le côté intérieur du tunnel central (8).

6. Véhicule selon l'une des revendications précédentes, **caractérisé en ce qu'**un deuxième interstice d'air (s₂) est prévu entre l'installation (10) de gaz d'échappement et le tunnel central (8) et **en ce qu'**en particulier la bordure avant (20a) de l'élément isolant (20) délimite un espace d'écoulement (22) qui relie l'un à l'autre en termes d'écoulement le premier interstice d'air (s₁) et le deuxième interstice d'air (s₂) .

7. Procédé selon la revendication 6, **caractérisé en ce qu'**un élément (27) de blindage contre la chaleur qui divise le deuxième interstice d'air (s₂) en deux interstices partiels est disposé entre le tunnel central (8) et l'installation (10) de gaz d'échappement.

8. Véhicule selon l'une des revendications précédentes, **caractérisé en ce que** pour améliorer l'aérodynamique, un revêtement de plancher (19) est prévu et recouvre le côté inférieur du plancher du véhicule en libérant le passage pour le tunnel central (8) et la voie longitudinale (13a).

9. Procédé selon la revendication 8, **caractérisé en ce qu'**un élément d'étanchéité (31) qui s'étend en particulier dans la direction transversale (y) du véhicule et qui empêche un transfert de chaleur, en particulier par convexion d'air dans l'espace intermédiaire (29) vers la batterie de traction (12) est prévu dans l'espace intermédiaire (29) entre l'habillage (19) du plancher et le plancher du véhicule.
